# EUROPEAN PATENT SPECIFICATION

(11) **EP 3 279 506 B1**
(45) Date of publication and mention of the grant of the patent: **17.04.2019**
(21) Application number: 16792596.5
(22) Date of filing: 28.04.2016
(51) Int. Cl.: F16H 1/16, B62D 5/04, F16H 55/24

(54) **WORM GEAR REDUCER**
SCHNECKENGETRIEBE
RÉDUCTEUR À VIS SANS FIN

(30) Priority: 13.05.2015 JP 2015098471
(43) Date of publication of application: 07.02.2018
(73) Proprietor: NSK Ltd., Tokyo 141-8560 (JP)
(72) Inventor: SEGAWA Toru, Maebashi-shi Gunma 371-8527 (JP)
(74) Representative: Mewburn Ellis LLP
(86) International application number: PCT/JP2016/063487
(87) International publication number: WO 2016/181871

(56) References cited:
- WO-A1-2008/087749
- WO-A1-2013/161845
- GB-A- 2 008 863
- JP-A- 2005 042 913
- JP-A- 2014 061 834

## Description

### Technical Field

The present invention relates to improvements on a worm reducer which is to be used in various mechanical apparatuses such as an electric power steering device.

### Background Art

When applying a steering angle to steered wheels (generally, front wheels except for a special vehicle such as a forklift), a power steering device has been widely used as a device for reducing a force necessary for a driver to operate a steering wheel. As such power steering device, there has been recently used an electric power steering device configured to use an electric motor as an auxiliary power source. The electric power steering device is advantageous as compared to a hydraulic power steering device in that the electric power steering device can be made smaller and lighter, an amount (torque) of auxiliary power can be easily controlled, and a power loss of an engine is smaller, for example.

Various structures have been known for the electric power steering device. In any structure, auxiliary power of the electric motor is applied via a reducer to a steering shaft configured to rotate in accordance with an operation of the steering wheel or a member (a pinion shaft or a rack shaft configuring a steering gear unit) configured to be displaced in accordance with rotation of the steering shaft. As the reducer, a worm reducer is generally used. In the case of the electric power steering device using the worm reducer, a worm shaft configured to rotate by the electric motor and a worm wheel configured to rotate together with a rotary shaft, which is an output part of the worm reducer, are meshed with each other such that the auxiliary power of the electric motor can be transmitted to the rotary shaft.

For example, Patent Document 1 discloses an electric power steering device as shown in FIGS. 11 and 12. A front end portion of a steering shaft 2, which is a rotary shaft configured to rotate in a predetermined direction by a steering wheel 1, is rotatably supported to an inner side of a housing 3, and a worm wheel 4 is fixed to this part. In a state where worm teeth 6 provided on an axially intermediate part of a worm shaft 5 are meshed with the worm wheel 4, a base end portion and a tip end portion of the worm shaft 5 are rotatably supported to the inner side of the housing 3 by a base end-side bearing 7 and a tip end-side bearing 8, respectively. An output shaft 10 of an electric motor 9, which is a driving source, is connected to the base end portion of the worm shaft 5 such that the worm shaft 5 can be rotationally driven.

In the worm reducer including the worm wheel 4 and the worm shaft 5, a backlash exists inevitably at a meshing portion between the worm wheel 4 and the worm teeth 6. The backlash is caused by a dimensional error and a mounting error of each member configuring the worm reducer and is also caused as tooth surfaces of the worm wheel 4 and the worm teeth 6 are worn. If the backlash exists at the meshing portion, when changing a rotating direction of the rotary shaft 2, uncomfortable gear striking noise may be generated at the meshing portion. Therefore, in the shown structure, a pressing piece 11 is externally fitted to a part of the tip end portion of the worm shaft 5, which protrudes beyond the tip end-side bearing 8, and an elastic member such as a coil spring 12 is provided between the pressing piece 11 and the housing 3. The worm teeth 6 of the worm shaft 5 are pressed by the coil spring 12 towards the worm wheel 4 via the pressing piece 11. By this configuration, the backlash between the worm teeth 6 and the worm wheel 4 is suppressed, so that the gear striking noise is suppressed.

According to the above conventional structure, the worm shaft 5 has the part, to which the pressing piece 11 is externally fitted, at the further tip end-side than a part which is supported by the tip end-side bearing 8. Therefore, an axial dimension of the worm shaft 5 is longer for that length, so that there is a room for improvement.

JP-A-2005-042913 discloses a worm speed reducer according to the preamble of claim 1. Elastic force towards a worm wheel is applied to a worm shaft through a pressurization pad by a torsion coil spring. The pressurization pad restricts the displacement in the width direction using a partial side face of a holder fixed to a gear housing. A side face of the pressurization pad is brought into contact with the partial side face of the holder by elastic deformation of the pressurization pad itself, based on the elastic force of the torsion coil spring, whereby a clearance between the pressurization pad and the partial side face is reduced. As a result, the occurrence of a teeth fitting noise in the worm speed reducer is suppressed.

### Prior Art Documents

### Patent Documents

Patent Document 1: JP-B-4381024

### Summary of the Invention

### Problems to be Solved

The present invention has been made in view of the above circumstances, and an object is to provide a worm reducer including an urging unit configured to urge a worm shaft in a meshing direction so as to suppress backlash at a meshing portion between a worm wheel and worm teeth and having a structure capable of reducing an axial dimension of a tip end-side portion of the worm shaft.

### Means for Solving the Problems

A worm reducer of the present invention includes a housing, a worm wheel, a worm shaft, a tip end-side bearing, a rocking member, an urging member and a guide member.

The worm wheel is rotatably supported to the housing.

The worm shaft rotatably supported to the housing with worm teeth provided on an axially intermediate part thereof being meshed with the worm wheel, and a rotational force from a power source is transmitted to a base end portion of the worm shaft.

The tip end-side bearing is configured to support a tip end-side portion of the worm shaft rotatably with respect to the housing;

The rocking member is provided around the tip end-side bearing inside the housing and is configured to rock about a rocking shaft extending in a direction perpendicular to a center axis of the worm shaft.

The urging member is configured to urge the rocking member towards one side in a rocking direction about the rocking shaft.

The guide member is provided to allow the worm shaft to move in a meshing direction in which the worm shaft comes close to the worm wheel, and which is urged in the meshing direction as the rocking member is urged to the one side in the rocking direction about the rocking shaft by the urging member, thereby urging the worm shaft in the meshing direction via the tip end-side bearing.

In the meantime, when implementing the present invention, the guide member may be provided integrally with the tip end-side bearing (for example, it may be provided integrally with an outer ring configuring the tip end-side bearing).

When implementing the present invention, the rocking member may include a part which can be located at a position further than a center axis of the rocking shaft in an opposite direction to the meshing direction and include a wedge portion of which a radial thickness increases from one side in the rocking direction about the rocking shaft towards the other side. The guide member may be urged in the meshing direction based on the increase of the radial thickness of a part of the wedge portion which is interposed between inner peripheral surface of the housing and an outer peripheral surface of the guide member as the rocking member is urged to the one side in the rocking direction about the rocking shaft by the urging member.

Further, when implementing the present invention, the guide member may be further urged in the meshing direction by a reactive force which is to be applied to the guide member when the urging member urges the rocking member.

Further, when implementing the present invention, an outer peripheral surface of the rocking member may include an outer spherical convex surface part, and an inner peripheral surface of the rocking member may include an inner spherical concave surface part with which the guide member is in sliding contact, and a center of curvature of the outer spherical convex surface part may be located at a position offset from a center of curvature of the inner spherical concave surface part.

Further, when implementing the present invention, one of the rocking member and the guide member may be provided with the rocking shaft, and the other of the rocking member and the guide member may be provided with a pivotal support part configured to pivotably support the rocking shaft.

Further, when implementing the present invention, an outer peripheral surface of the guide member may include an inner spherical convex surface part having a center at a point on the center axis of the rocking shaft, and an inner peripheral surface of the rocking member may include an inner spherical concave surface part which is to be spherically fitted with the inner spherical convex surface part.

Further, when implementing the present invention, the rocking member may include a rocking-side engaging part, and the guide member may include a guide-side engaging part, and a rocking range of the rocking member about the rocking shaft may be regulated based on engagement of both the engaging parts.

Further, when implementing the present invention, an elastic member may be interposed between an inner peripheral surface of the housing and an outer peripheral surface of the rocking member, and the rocking member may be urged in the meshing direction by an elastic force of the elastic member.

Also, when implementing the present invention, the rocking member may be supported inside the housing without radial rattling by the elastic force of the elastic member.

Further, when implementing the present invention, the urging member may include a coil spring, and both end portions of the coil spring may be engaged to the rocking member while an inner peripheral surface thereof is contacted to an outer peripheral surface of the guide member, so that the coil spring urges the rocking member to the one side in the rocking direction about the rocking shaft and applies a reactive force in the meshing direction, which is to be applied to the outer peripheral surface of the guide member by urging of the rocking member.

Further, when implementing the present invention, one end-side portion of the urging member may be configured to urge the guide member in the meshing direction and the other end-side portion of the urging member may be configured to urge the rocking member to the one side in the rocking direction about the rocking shaft.

### Effects of the Invention

According to the worm reducer of the present invention configured as described above, the guide member is configured such that when the rocking member rocks to one side in the rocking direction about the rocking shaft, the guide member is moved in the meshing direction, which is the direction in which the worm shaft comes close to the worm wheel, thereby urging the worm shaft in the meshing direction via the tip end-side bearing. For this reason, it is not necessary to provide the tip end-side portion of the worm shaft with a part, which is to further extend towards the tip end-side than a part which is supported by the tip end-side bearing. Therefore, it is possible to reduce an axial dimension of the tip end-side portion of the worm shaft for that amount.

### Brief Description of the Drawings

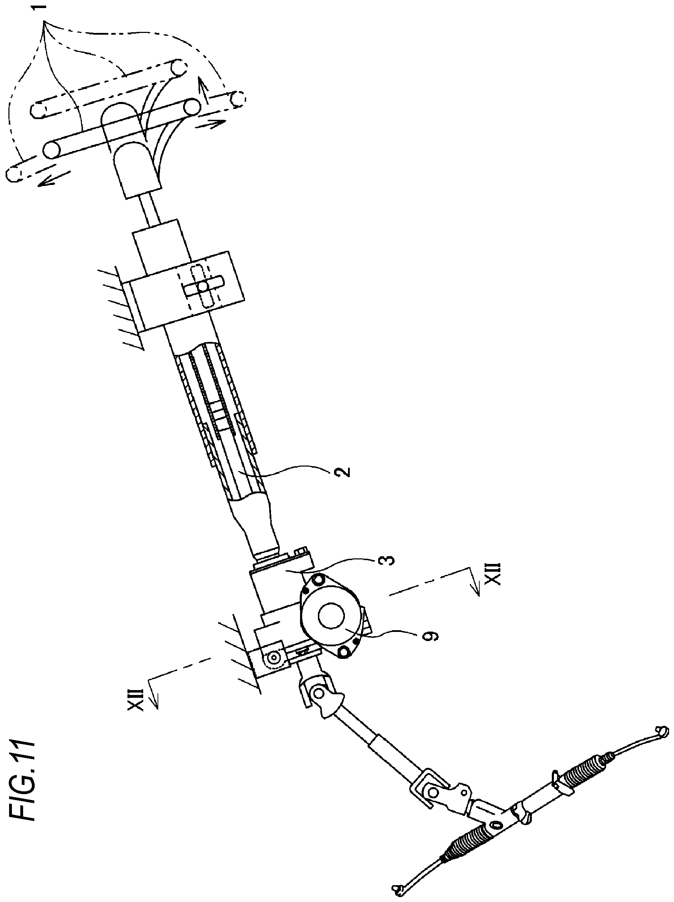

FIG. 1 is a view equivalent to an enlarged sectional view taken along a line XII-XII of FIG. 11 and shows a first embodiment of the present invention.
FIG. 2 is an enlarged view of an II part of FIG. 1.
FIG. 3 is the same view as FIG. 2 and shows a state where a rocking amount of a rocking member in an urging direction increases.
FIG. 4 is a perspective view of an urging unit mounted to a tip end portion of a worm shaft.
FIG. 5 is an exploded perspective view of the urging unit, a tip end portion of a worm shaft having a tip end-side bearing mounted thereto and a housing.
FIG. 6 is an exploded perspective view showing a rocking member, an urging member and a guide member, which configure the urging unit as seen from a tip end-side of the worm shaft.
FIG. 7 is an exploded perspective view showing the same as seen from a base end-side of the worm shaft.
FIG. 8 shows a plate spring in a mounted state as seen from an axial direction.
FIG. 9 is the same view as FIG. 6 and shows a modified embodiment of the first embodiment.
FIG. 10 is the same view as FIG. 2 and shows a second embodiment of the present invention.
FIG. 11 is a partially cut side view showing an example of a conventional steering device.

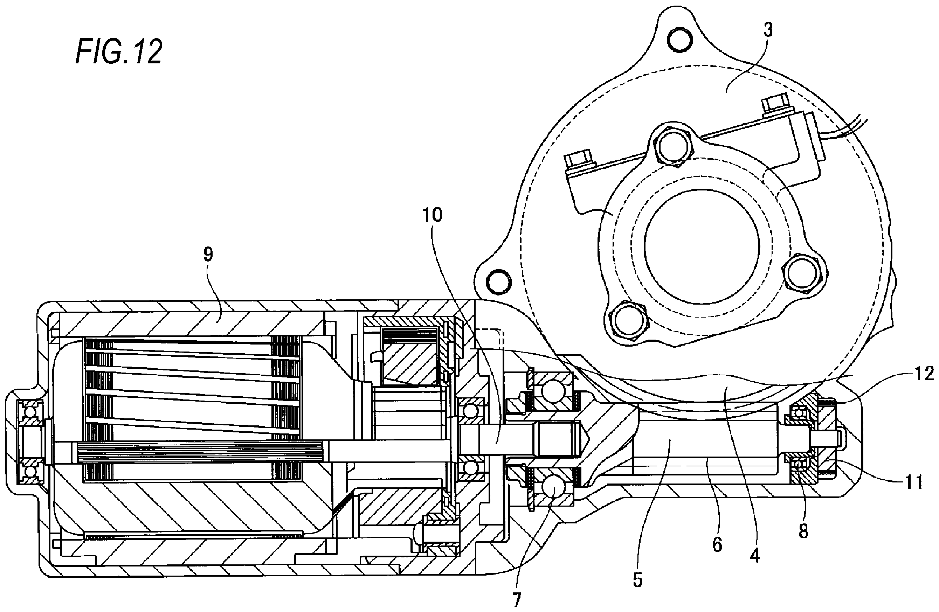

FIG. 12 is an enlarged sectional view taken along a line XII-XII of FIG. 11.

### Detailed Description of Embodiments

### [First Embodiment]

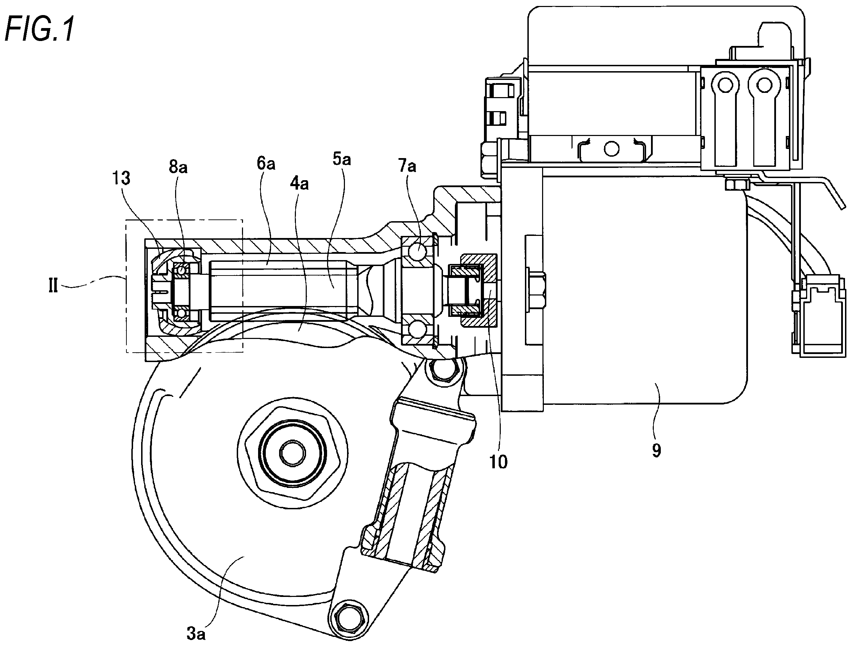

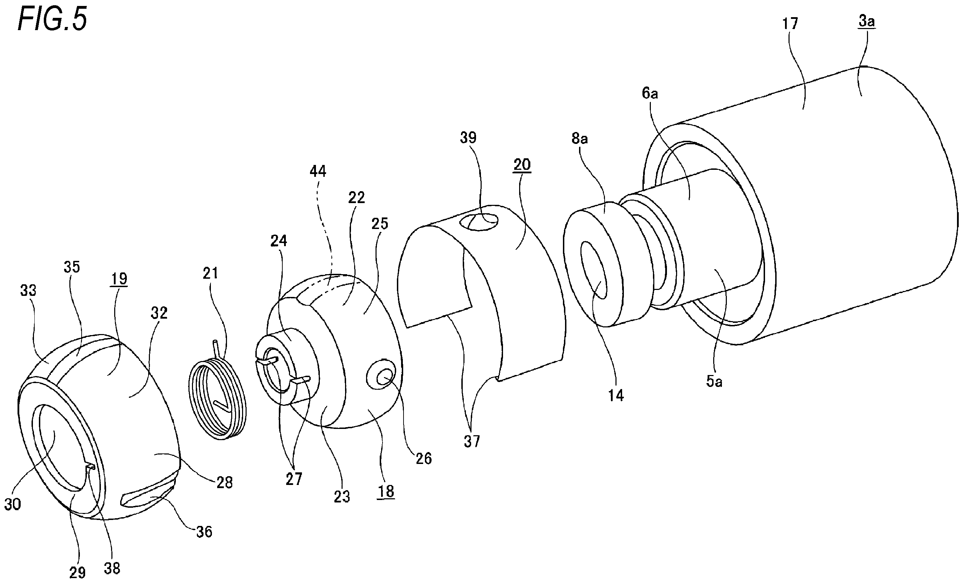

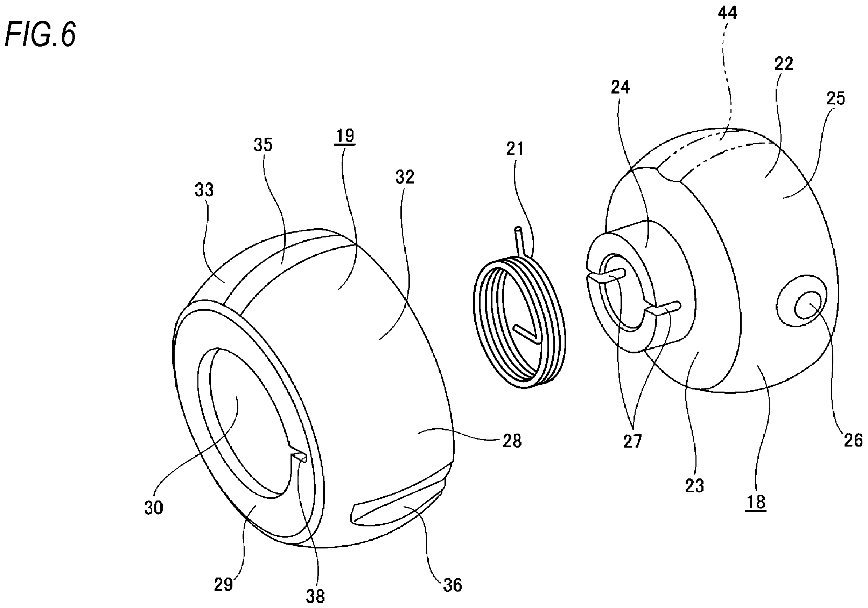

A first embodiment of the present invention will be described with reference to FIGS. 1 to 8.

A worm reducer of the first embodiment is to be used with being incorporated to an electric power steering device and includes a housing 3a, and a worm wheel 4a, a worm shaft 5a and an urging unit 13, which are accommodated in the housing 3a.

The worm wheel 4a is rotatably supported to the housing 3a. The worm shaft 5a is rotatably supported to the housing 3a at a base end portion (a right end portion in FIG. 1) by a base end-side bearing 7a, which is a ball bearing of a single row deep groove type or a four-point contact type, and at a tip end portion (a left end portion in FIG. 1) by a tip end-side bearing 8a, which is a ball bearing of a single row deep groove type, with worm teeth 6a provided on an axially intermediate part thereof being meshed with the worm wheel 4a. The base end-side bearing 7a is configured to support the worm shaft 5a to the housing 3a so as to be slightly swingably displaceable. The tip end-side bearing 8a is externally fitted and supported to a small-diameter portion 14 provided at the tip end portion of the worm shaft 5a. An inner ring 15 of the tip end-side bearing 8a is externally fitted and fixed to the small-diameter portion 14 by interference fit. In the first embodiment, a tip end portion of the small-diameter portion 14 is configured not to protrude axially outwards from a radially inner side of the inner ring 15. A cylindrical holding part 17 having an inner peripheral surface of a single cylindrical shape is provided around the tip end-side bearing 8a in the housing 3a, and an axially outer end portion (a left end portion in FIGS. 1 to 3 and 5) of the holding part 17 is opened towards an external space. The outer end opening of the holding part 17 is blocked by a cap (not shown). An output shaft 10 of an electric motor 9 supported and fixed to the housing 3a is connected to the base end portion of the worm shaft 5a such that the worm shaft 5a can be rotationally driven. In the first embodiment, the electric motor 9 is an example of the power source in claims.

The urging unit 13 is provided around the tip end-side bearing 8a in the holding part 17. The worm shaft 5a is urged by the urging unit 13 in a meshing direction (a direction facing from the upper towards the lower in FIGS. 1 to 3), which is a direction in which the worm shaft 5a comes close to the worm wheel 4a, via the tip end-side bearing 8a. The urging unit 13 includes a guide member 18 externally fitted and fixed to the outer ring 16 of the tip end-side bearing 8a, a rocking member 19 interposed between an outer peripheral surface of the guide member 18 and an inner peripheral surface of the single cylindrical shape of the holding part 17, a plate spring 20 which is an example of the elastic member in claims, and a coil spring 21 which is extended between the guide member 18 and the rocking member 19 and an example of the urging member in claims.

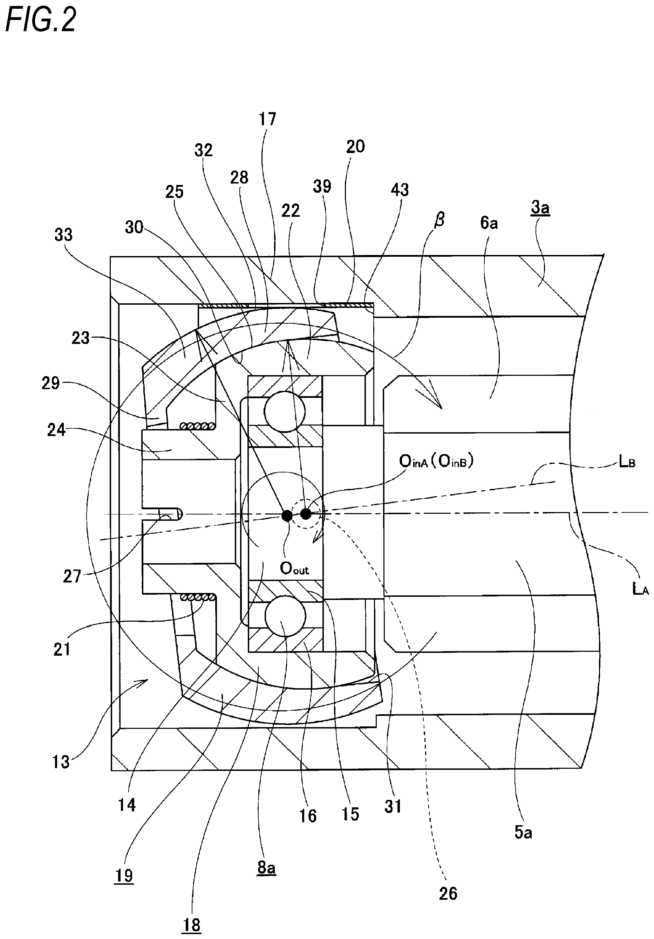

In the below descriptions, regarding the urging unit 13, a left side in FIGS. 2 to 7 is referred to as an axially outer side, and a right side is referred to as an axially inner side.

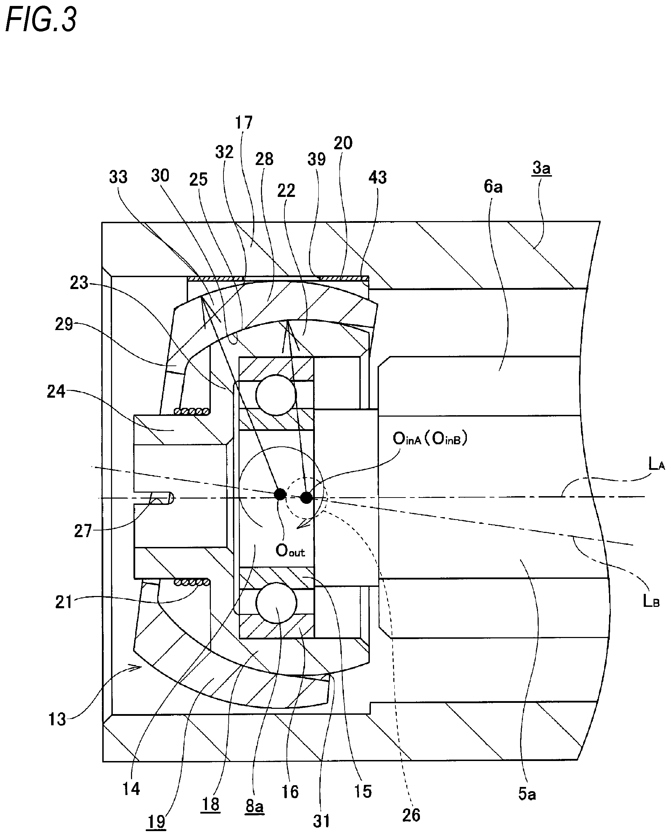

The guide member 18 is formed to have a circular ring shape having a crank section (refer to FIG. 3) as a whole and is made of metal such as iron-based alloy, aluminum-based alloy or the like or a synthetic resin. The guide member 18 has a cylindrical fitting cylinder part 22, a coupling part 23 having a circle ring shape and formed by bending radially inwards an axially outer end portion of the fitting cylinder part 22, and a boss part 24 extending axially outwards from a radially inner end portion of the coupling part 23 and provided coaxially with the fitting cylinder part 22. An outer peripheral surface of the fitting cylinder part 22 is provided with an inner spherical convex surface part 25. A pair of rocking shafts 26 each of which has a truncated conical shape (not limited, and may be for example, a circular column shape or a circular cylinder shape) and coaxially protrudes at two positions (two positions which are front and back sides of FIGS. 1 to 3) which are radially opposite sides of an axially intermediate part of the inner spherical convex surface part 25. A center of curvature O_{inA} of the inner spherical convex surface part 25 is located on a center axis of the rocking shaft 26, specifically, at an intersection point of the center axis of the rocking shaft 26 and a center axis (center axis of the fitting cylinder part 22 and the boss part 24) L_{A} of the guide member 18. A pair of guide-side spring engaging portions 27, 27 each of which opens towards an axially outer end surface of the boss part 24 and has a slit (cutout) shape is axially formed at two positions (two positions which are front and back sides of FIGS. 1 to 3) which are radially opposite sides of an axially outer half part of the boss part 24.

The guide member 18 is supported to the outer ring 16 concentrically with the outer ring 16 by externally fitting and fixing the fitting cylinder part 22 to the outer ring 16 with interference fit, bonding or the like. The guide member 18 is axially positioned relative to the outer ring 16 by bringing an axially inner surface of the coupling part 23 into contact with an axially outer surface of the outer ring 16. At this state, the center axes of the rocking shafts 26 are provided in a direction (the front and back sides of FIGS. 1 to 3) perpendicular to the center axis (center axis of the worm shaft 5a) L_{A} of the guide member 18 and perpendicular to the meshing direction.

In the meantime, when the rocking member 19 is moved by a wedge portion 33 (described later) and the worm shaft 5a is thus moved in a direction of coming close to the worm wheel 4a, the center axes of the rocking shafts 26 may deviate from the direction perpendicular to the meshing direction.

The rocking member 19 is formed to have a cylinder shape of which both axial sides are opened, is made of metal such as iron-based alloy, aluminum-based alloy or the like or a synthetic resin, and has a main body part 28 and a collar part 29. The main body part 28 is formed to have a cylinder shape having a substantially circular arc section as a whole (refer to FIG. 3). An axially intermediate part of an inner peripheral surface of the main body part 28 is provided with an inner spherical concave surface part 30. A center of curvature O_{inB} of the inner spherical concave surface part 30 is located on a center axis L_{B} of the rocking member 19 (center axis of the main body part 28). A center of curvature of the inner spherical concave surface part 30 is the same as the center of curvature of the inner spherical convex surface part 25. A part, which is close to an axially inner side of the inner spherical concave surface part 30, of an axially inner end portion of the inner peripheral surface of the main body part 28, is provided with a guide surface part 31 smoothly continuing to an axially inner end edge of the inner spherical concave surface part 30 and having a cylindrical shape of which an inner diameter is constant in the axial direction or a partially conical concave surface shape inclined in a direction in which an inner diameter increases towards an axially inner side.

An outer peripheral surface of the main body part 28 is provided with an outer spherical convex surface part 32. A center of curvature Oₒᵤₜ of the outer spherical convex surface part 32 is located at a position, which deviates axially outwards from the center of curvature O_{inB} of the inner spherical concave surface part 30, on the center axis L_{B} of the rocking member 19. Therefore, a radial thickness of a part of the main body part 28, which is interposed between the outer spherical convex surface part 32 and the inner spherical concave surface part 30, gradually increases from the axially inner side towards the axially outer side. In the first embodiment, a portion, which can be positioned in a further opposite direction (the upper side in FIGS. 1 to 3) to the meshing direction than the center axes of the rocking shafts 26 at an assembled state (a state where a rockable range of the rocking member 19 relative to the guide member 18 about the rocking shafts 26) (described later), of the part of the main body part 28 interposed between the outer spherical convex surface part 32 and the inner spherical concave surface part 30 is configured as a wedge portion 33 of which a radial thickness increases from one side (a right side in FIGS. 1 to 3) in the rocking direction about the rocking shafts 26 towards the other side (a left side in FIGS. 1 to 3).

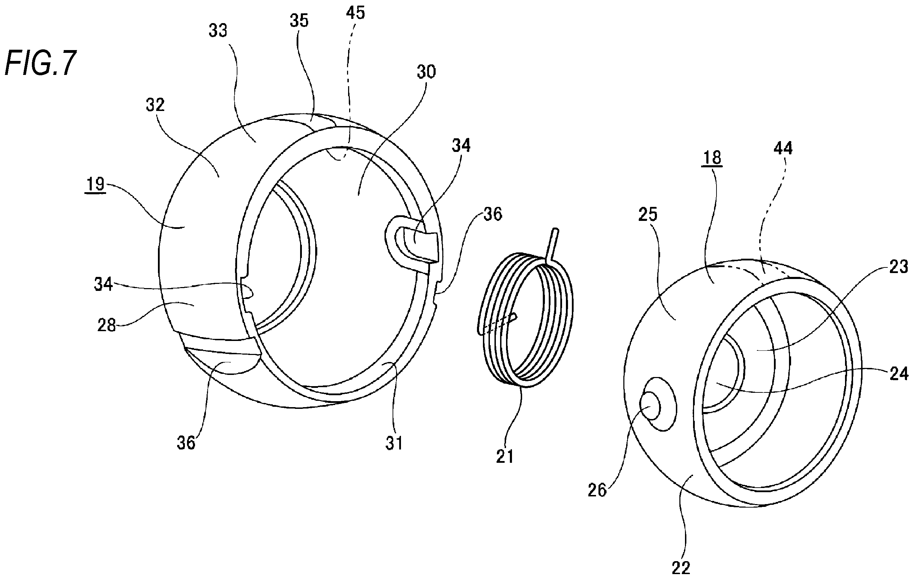

A pair of pivotal support concave parts 34, 34 (refer to FIG. 7) is provided at two positions (two positions which are front and back sides of FIGS. 1 to 3) which are radially opposite sides of an axially inner end portion or a portion close to an inner end of the inner peripheral surface of the main body part 28. The pivotal support concave parts 34, 34 are provided along the center axis L_{B} of the rocking member 19 with being formed across the axially inner end portion of the inner spherical concave surface part 30 and the guide surface part 31, and axially inner end portions thereof are respectively opened towards the axially inner end surface of the main body part 28. Meanwhile, in the first embodiment, the pivotal support concave parts 34, 34 are examples of the pivotal support part in claims.

An end portion of the outer spherical convex surface part 32 in the opposite direction (the upper side in FIGS. 1 to 3) to the meshing direction is provided with a guide groove 35 perpendicular to the circumferential direction. Both sides of the outer spherical convex surface part 32 in the circumferential direction about the guide groove 35 are provided with engaging concave portions 36, 36 at two positions spaced from the guide groove by about 90° to 120°, which is a center angle, respectively. The engaging concave portions 36, 36 are provided so as to engage a pair of claw portions 37, 37 provided at both circumferential end portions of the plate spring 20 (described later). A circumferential width dimension of each of the engaging concave portions 36, 36 is regulated to a minimum dimension within a range in which even when the rocking member 19 rocks about the rocking shafts 26 or the plate spring 20 is radially squashed between the outer spherical convex surface part 32 and the inner peripheral surface of the holding part 17 and a circumferential length of the plate spring 20 is thus increased as much as that, at an assembled state (described later), the claw portions 37, 37 are not to strongly interfere with circumferential inner surfaces of the engaging concave portions 36, 36.

The collar part 29 is a circle ring-shaped part protruding radially inwards from a part adjacent to an axially outer side of the inner spherical concave surface part 30 at an axially outer end portion of the inner peripheral surface of the main body part 28. One portion (one portion of a front side in the front and back sides of FIGS. 1 to 3) of the collar part 29 in the circumferential direction is provided with a rocking-side spring engaging portion 38 formed in the radial direction and having a slit (cutout) shape opening towards an inner peripheral surface of the collar part 29.

In the rocking member 19 configured as described above, the fitting cylinder part 22 of the guide member 18 is inserted into the radially inner side of the main body part 28 through the axially inner end opening of the main body part 28 (while guiding the inner spherical convex surface part 25 by the guide surface part 31). Thereby, the inner spherical concave surface part 30 is spherically fitted to the inner spherical convex surface part 25 so as to be slidable (the centers of curvature O_{inA}, O_{inB} thereof coincide with each other). The rocking shafts 26 configuring the guide member 18 are inserted to the axially outer end portions of the inner sides of the pivotal support concave parts 34, 34 through the axially inner end openings of the pivotal support concave parts 34, 34. The rocking shafts 26 are rockingly supported by the axially outer end portions of the pivotal support concave parts 34, 34. Thereby, the rocking member 19 can rock relative to the guide member 18 about the rocking shafts 26 (along the inner spherical convex surface part 25) and is prevented from rotating about the center axis (the center axis of the worm shaft 5a) L_{A} of the guide member 18.

In the first embodiment, at this state, the inner peripheral surface of the collar part 29 configuring the rocking member 19 is made to face the outer peripheral surface of the axially outer end portion of the boss part 24 configuring the guide member 18. Based on the engagement between the inner peripheral surface of the collar part 29 and the outer peripheral surface of the axially outer end portion of the boss part 24, a rockable range of the rocking member 19 relative to the guide member 18 about the rocking shafts 26 is regulated. In the first embodiment, the rockable range is regulated to about ±10° to 15° with respect to a state where the center axis L_{B} of the rocking member 19 and the center axis L_{A} of the guide member 18 coincide with each other. Thereby, the interference between the rocking member 19 and the worm shaft 5a is prevented. Meanwhile, in the first embodiment, the inner peripheral surface of the collar part 29 is an example of the rocking-side engaging part in claims, and the outer peripheral surface of the axially outer end portion of the boss part 24 is an example of the guide-side engaging part in claims.

The plate spring 20 has a partially cylindrical shape as a whole and has a pair of claw portions 37, 37 bent radially inwards at both circumferential end portions. A spring constant of the plate spring 20 is set to be sufficiently small. The plate spring 20 is provided with a circle hole 39 at an axially center portion of a circumferentially center portion thereof, so that rigidity of the plate spring 20 in the circumferentially center portion is made to be lower than rigidity of the other portion. An inner diameter dimension of the plate spring 20 at a free state is made smaller than an outer diameter dimension of the outer spherical convex surface part 32.

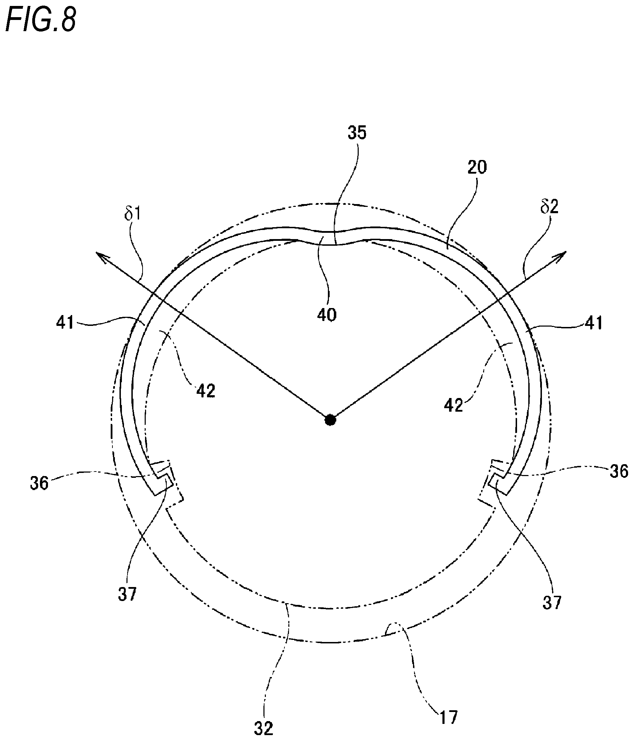

The plate spring 20 is resiliently supported between the outer spherical convex surface part 32 and the inner peripheral surface of a single cylindrical shape of the holding part 17 with the circumferentially center portion being positioned in the opposite direction (the upper side in FIGS. 1 to 3) to the meshing direction and the claw portions 37, 37 being engaged to the engaging concave portions 36, 36 provided on the outer spherical convex surface part 32. At this state, as exaggeratingly shown in FIG. 8, the circumferentially center portion of the plate spring 20, which has the rigidity lower than the other portion, becomes a center engaging portion 40 bent radially inwards, and the center engaging portion 40 is engaged to the guide groove 35 provided on the outer spherical convex surface part 32 so as to be slidable in a longitudinal direction of the guide groove 35. Both circumferential sides of the plate spring 20 between which the center engaging portion 40 is interposed become elastically deformable portions 41, 41 each of which has a circular arc plate shape and is convex radially outwards, and wedge-shaped fine gaps 42, 42 are respectively formed between inner peripheral surfaces of the elastically deformable portions 41, 41 and the outer spherical convex surface part 32.

At this state, an axially inner end portion of the plate spring 20 is abutted to a step surface 43 of an axially inner end portion of the inner peripheral surface of the holding part 17, so that the plate spring is axially positioned relative to the holding part 17. The plate spring 20 is prevented from being circumferentially displaced (rotated) relative to the holding part 17 by a frictional force which is to be applied to a contact part between the inner peripheral surface of the holding part 17 and the step surface 43. The plate spring 20 is configured to prevent the rocking member 19 from rotating about the center axis L_{B} relative to the plate spring 20 based on the engagement between the claw portions 37, 37 and the engaging concave portions 36, 36 and the engagement between the center engaging portion 40 and the guide groove 35. In the meantime, as described above, the circumferential width dimension of each of the engaging concave portions 36, 36 is regulated to the minimum dimension within the range in which even when the rocking member 19 rocks about the rocking shafts 26 or the plate spring 20 (the elastically deformable portions 41, 41) is radially squashed between the outer spherical convex surface part 32 and the inner peripheral surface of the holding part 17 and the circumferential length of the plate spring 20 is increased as much as that, the claw portions 37, 37 are not to strongly interfere with both circumferential inner surfaces of the engaging concave portions 36, 36. As described above, in the first embodiment, the plate spring 20 is mounted such that the rocking member 19 is internally fitted to the holding part 17 without the radial rattling by the elastic force of the plate spring 20.

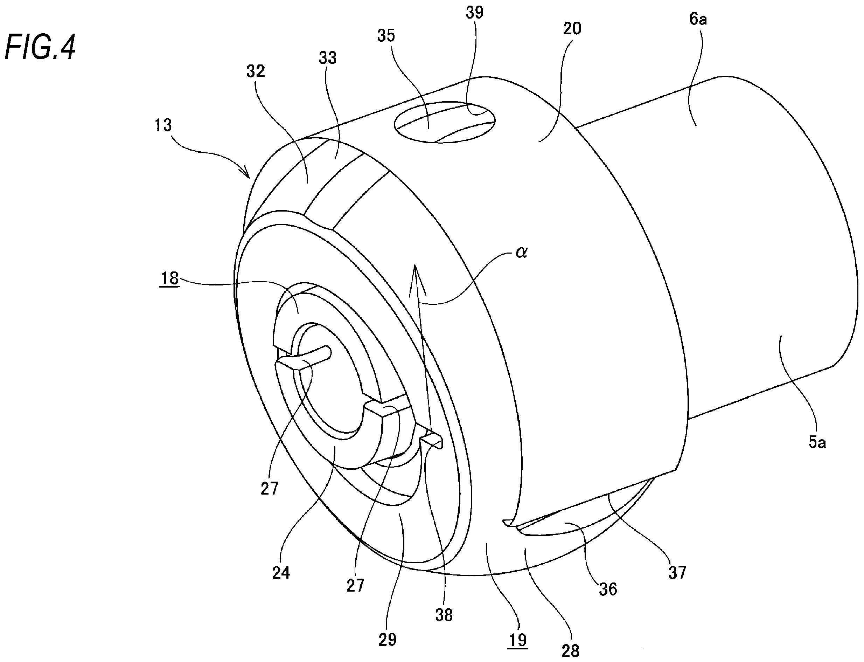

The coil spring 21 is externally fitted to an axially inner half portion of the boss part 24 configuring the guide member 18. At this state, one end-side portion of the coil spring 21 is engaged to one of the guide-side spring engaging portions 27 provided at the boss part 24. The other end-side portion of the coil spring 21 is engaged to the rocking-side spring engaging portion 38 provided at the collar part 29 of the rocking member 19. At this state, the portion of the collar part 29, at which the rocking-side spring engaging portion 38 is provided, is pressed in the opposite direction (the upward direction in FIGS. 1 to 3, a direction denoted with an arrow α in FIG. 4) to the meshing direction by the elastic force of the coil spring 21. Based on the pressing force (the elastic force of the coil spring 21), the rocking member 19 is urged to one side (a direction denoted with an arrow β in FIG. 2) in the rocking direction about the rocking shafts 26.

In the meantime, one end-side portion of the coil spring 21 is applied with a reactive force to the force by which the coil spring 21 presses the collar part 29 in the opposite direction to the meshing direction. For this reason, one end-side portion of the coil spring 21 urges the guide member 18 in the meshing direction via the guide-side spring engaging portion 27 of the boss part 24.

The urging of the guide member 18 in the meshing direction is not limited to the configuration where the urging is made via the guide-side spring engaging portion 27 and may be made via a contact surface between an upper surface of the boss part 24 of the guide member 18 and the coil spring 21.

Here, in the first embodiment, the wedge portion 33 configuring the rocking member 19 has a radial thickness which increases from one side (a right side in FIGS. 1 to 3) in the rocking direction about the rocking shafts 26 towards the other side (a left side in FIGS. 1 to 3). For this reason, as the wedge portion 33 is urged (rocked) towards one side in the rocking direction, a radial thickness of a part of the wedge portion 33, which is interposed between the inner peripheral surface of the holding part 17 (and the inner peripheral surface of the plate spring 20) and the inner spherical convex surface part 25, increases. As a result, the guide member 18 is urged (moved) in the meshing direction (the center of curvature O_{inA} (O_{inB}) is moved relative to the center of curvature Oₒᵤₜ in the meshing direction), so that the worm shaft 5a is urged in the meshing direction via the tip end-side bearing 8a. In the first embodiment, the worm shaft 5a is urged in the meshing direction in this way, so that it is possible to suppress the backlash at the meshing portion between the worm teeth and the worm wheel 4a. Meanwhile, in the first embodiment, the centers of curvature O_{inA}(O_{inB}) and Oₒᵤₜ exist on the center axis L_{A} of the worm shaft 5a at the state where the center axes L_{A}, L_{B} coincide with each other. Therefore, it is possible to efficiently urge the rocking member 19 toward one side in the rocking direction by the elastic force of the coil spring 21. On the other hand, when implementing the present invention, the positional relation between the centers of curvature O_{inA}(O_{inB}) and Oₒᵤₜ, which is to be implemented at a using state, may be different from the first embodiment (for example, it may slightly deviate from the positional relation of the first embodiment), due to a relation of layouts of the respective constitutional members, and the like.

In the first embodiment, even when a meshing distance between the worm wheel 4a and the worm teeth 6a is changed due to the rotation of the worm wheel 4a, the rotation of the worm shaft 5a, a change in thermal expansion amount of each member resulting from a change in temperature, and the like, it is possible to reduce a variation in meshing force between the worm wheel 4a and the worm teeth 6a, based on the elastic deformation of the plate spring 20 (the elastically deformable portions 41, 41). That is, when the meshing distance is changed, the dimensions of the fine gaps 42, 42 between the inner peripheral surface of the plate spring 20 (the elastically deformable portions 41, 41) and the outer spherical convex surface part 32 are changed. However, in the first embodiment, the spring constant of the plate spring 20 is set to be sufficiently low. Therefore, even when the dimensions of the fine gaps 42, 42 are changed, it is possible to reduce the variation in meshing force. As a result, it is possible to reduce the variation in frictional force which is to be applied to the meshing portion between the worm wheel 4a and the worm teeth 6a.

Meanwhile, in the first embodiment, the dimensions of the fine gaps 42, 42 are determined by the dimension of the plate spring 20, the inner diameter of the holding part 17, and the center of curvature of the outer spherical convex surface part 32. Since the dimension, the inner diameter and the center of curvature are respectively finished with precision, it is possible to sufficiently suppress the inequality of the dimensions of the fine gaps 42, 42. When the backlash at the meshing portion between the worm wheel 4a and the worm teeth 6a and the fine gaps 42, 42 increase due to the wears of tooth surfaces of the worm wheel 4a and the worm teeth 6a, the rocking member 19 rocks to one side in the rocking direction, so that the backlash and the fine gaps 42, 42 are prevented from increasing. In addition, since the balanced state of the initial forces of the urging reactive force to be applied from the guide member 18 to the rocking member 19 and the reactive force based on the elastic deformation of the plate spring 20 is kept, it is possible to always keep the dimensions of the fine gaps 42, 42 to appropriate dimensions. Even when the guide member 18 and the rocking member 19 are applied with the load and are thus elastically deformed, the rocking member 19 rocks to one side in the rocking direction, so that the balanced state of the initial forces is kept. Therefore, it is possible to always keep the dimensions of the fine gaps 42, 42 to the appropriate dimensions.

In the first embodiment, upon generation of the auxiliary power of the electric motor 9, when an engaging reactive force is applied from the meshing portion to the worm shaft 5a and the tip end-side bearing 8a is thus applied with high radial load, at least one of the fine gaps 42, 42 is removed, so that it is possible to bear the high radial load by the inner peripheral surface of the holding part 17. In the first embodiment, as shown in FIG. 8, the circumferential sides of the plate spring 20 include the elastically deformable portions 41, 41 each of which has a circular arc plate shape and is convex radially outwards, and the elasticity range of the plate spring 20 is divided to both the circumferential sides. In the meantime, a direction of the radial load which is to be applied to the tip end-side bearing 8a by the engaging reactive force to be applied from the meshing portion to the worm shaft 5a is different depending on the rotation directions of the worm shaft 5a and the worm wheel 4a. Specifically, the directions of the respective radial loads are directions passing through the two elasticity ranges (the elastically deformable portions 41, 41) of the plate spring 20, as shown with arrows δ1, δ2 in FIG. 8. For this reason, the plate spring 20 can efficiently operate.

In the first embodiment, the rocking member 19 is internally fitted to the holding part 17 without the radial rattling by the elastic force of the plate spring 20. For this reason, when rotational vibrations are applied from the wheels to the worm wheel 4a, based on a component included in the engaging reactive force to be applied from the meshing portion to the worm shaft 5a in the direction (the front and back sides of FIGS. 1 to 3) perpendicular to the axial direction of the worm shaft 5a and the meshing direction, it is possible to suppress the worm teeth 6a from vibrating in the perpendicular direction to generate the gear striking noise.

According to the worm reducer of the first embodiment configured as described above, the guide member 18 is configured to urge the worm shaft 5a in the meshing direction via the tip end-side bearing 8a. For this reason, it is not necessary to provide the tip end-side portion of the worm shaft 5a with a part further extending towards the tip end-side than a part which is to be supported by the tip end-side bearing 8a. Therefore, it is possible to reduce the axial dimension of the tip end-side portion of the worm shaft 5a for that amount.

In the meantime, when implementing the present invention, a part, which is positioned at an opposite end portion to the meshing direction, of the outer peripheral surface (the inner spherical convex surface part 25) of the fitting cylinder part 22 may be provided with an inner guide part 44, which is a groove or a convex part, in a direction perpendicular to the circumferential direction, and a part, which is to fit together with the inner guide part 44, of the inner peripheral surface (the inner spherical concave surface part 30) of the rocking member 19 may be provided with an outer guide part 45, which is a convex part or a groove capable of engaging with the inner guide part 44, so that it is possible to guide the rocking of the rocking member 19 about the rocking shafts 26 (to prevent the rocking member 19 from rotating relative to the guide member 18 about the center axis L_{A}) by engagement between the inner and outer guide parts 44, 45, i.e., the convex part and the groove.

When implementing the present invention, the rocking member may be provided with a pair of rocking shafts, and the guide member may be provided with a pivotal support part such as the pivotal support concave parts configured to pivotally support the rocking shafts.

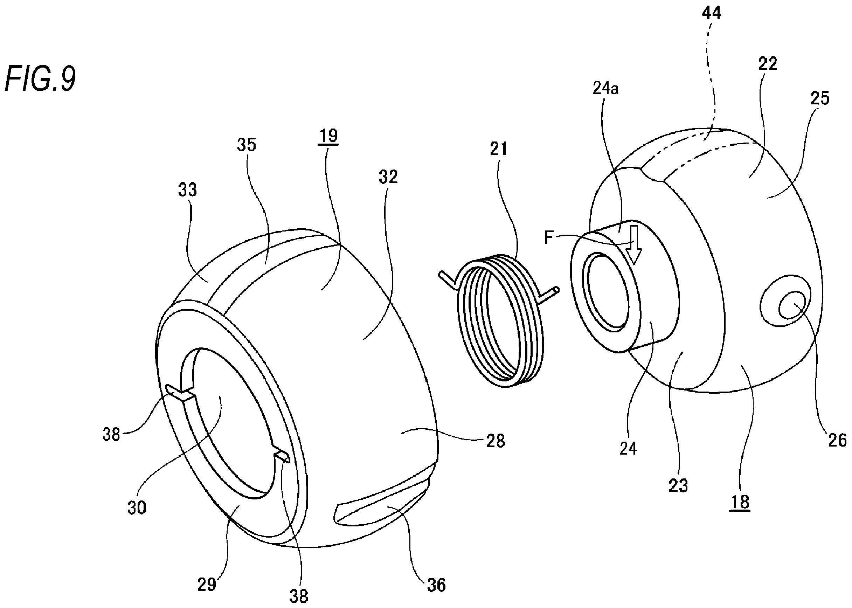

Meanwhile, in the first embodiment, both the end portions of the coil spring 21 are respectively engaged with the guide-side spring engaging portion 27 provided at the boss part 24 and the rocking-side spring engaging portion 38 provided at the collar part 29 of the rocking member 19, and the rocking member 19 is urged to one side in the rocking direction by the elastic force of the coil spring 21. However, as in a modified embodiment shown in FIG. 9, both the end portions of the coil spring 21 may be respectively engaged to a pair of rocking-side spring engaging portions 38 provided at two radially opposite positions of the collar part 29 of the rocking member 19, and the rocking member 19 may be urged to one side in the rocking direction by the elastic force of the coil spring 21. That is, the coil spring 21 is configured such that the inner peripheral surface thereof is to contact the outer peripheral surface of the boss part 24 of the guide member 18 and the both end portions are to be respectively engaged to the pair of rocking-side spring engaging portions 38 of the collar part 29 of the rocking member 19. Thereby, the rocking member 19 is urged to one side in the rocking direction about the rocking shafts 26 by the elastic force of the coil spring 21, and the reactive force F is applied in the meshing direction at a contact portion 24a of the boss part 24 to which the inner peripheral surface of the coil spring 21 is to be contacted.

Therefore, in the modified embodiment of the first embodiment, the guide member 18 is urged in the meshing direction and the worm shaft 5a is urged in the meshing direction via the tip end-side bearing 8a by both the urging (rocking) of the rocking member 19 to one side in the rocking direction and the reactive force F to be applied to the contact portion 24a of the boss part 24.

### [Second Embodiment]

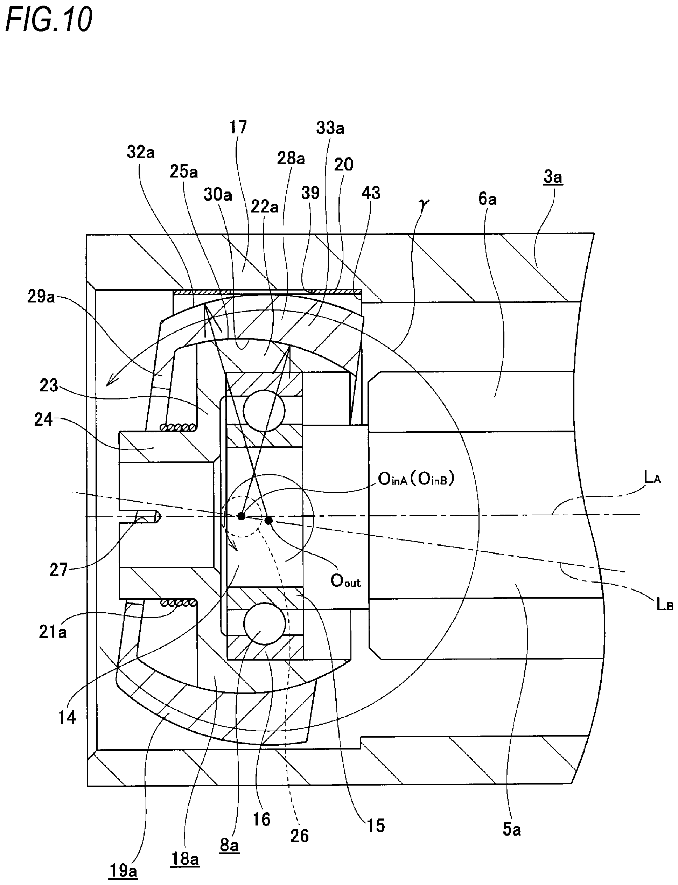

A second embodiment of the present invention is described with reference to FIG. 10.

In the second embodiment, the rocking direction of a rocking member 19a about the pair of rocking shafts 26 for urging the worm shaft 5a in the meshing direction (a downward direction in FIG. 10) by a guide member 18a is opposite to the first embodiment.

To this end, in the second embodiment, a part, at which the rocking-side spring engaging portion 38 (refer to FIG. 4) is provided, of a collar part 29a configuring the rocking member 19a is pressed in the meshing direction (a downward direction in FIGS. 4 and 10) by an elastic force of a coil spring 21a. Thereby, the rocking member 19a is urged in a direction denoted with an arrow γ in FIG. 10 about the rocking shafts 26.

The center of curvature Oₒᵤₜ of an outer spherical convex surface part 32a is positioned at an axially inner side (a right side in FIG. 10) relative to the center of curvature O_{inB} of an inner spherical concave surface part 30a on the center axis L_{B} of the rocking member 19a. Thereby, a radial thickness of a wedge portion 33a configuring the rocking member 19a increases from one side (a left side in FIG. 10) in the rocking direction about the rocking shafts 26 towards the other side (a right side in FIG. 10).

In the second embodiment, an inner diameter dimension of an axially inner opening of the inner spherical concave surface part 30a provided on an inner peripheral surface of the rocking member 19a is made smaller than an outer diameter dimension of an inner spherical convex surface part 25a provided on an outer peripheral surface of a fitting cylinder part 22a configuring the guide member 18a. To this end, in the second embodiment, the rocking member 19a is configured by coupling and fixing both circumferential end portions of a pair of division elements each of which has a semicylindrical shape, so that the inner spherical concave surface part 30a can be spherically fitted to the inner spherical convex surface part 25a.

The other configurations and operations are similar to the first embodiment.

### Industrial Applicability

When incorporating the worm reducer of the present invention into an electric power steering device, an assist type of the electric power steering device is not limited to the column assist type of the above embodiments, and may be a pinion assist type or a rack assist type.

The worm reducer of the present invention can be incorporated into various mechanical apparatuses, without being limited to the electric power steering device.

When implementing the present invention, the inner spherical convex surface part, the inner spherical concave surface part, the outer spherical convex surface part and the wedge portion are not necessarily provided over the entire circumference, and may be provided at any parts which can be positioned in a further opposite direction to the meshing direction than the center axis of the rocking shaft.

### Description of Reference Numerals

1: steering wheel
2: steering shaft
3, 3a: housing
4, 4a: worm wheel
5, 5a: worm shaft
6, 6a: worm teeth
7, 7a: base end-side bearing
8, 8a: tip end-side bearing
9: electric motor
10: output shaft
11: pressing piece
12: coil spring
13: urging unit
14: small-diameter portion
15: inner ring
16: outer ring
17: holding part
18, 18a: guide member
19, 19a: rocking member
20: plate spring
21, 21a: coil spring
22, 22a: fitting cylinder part
23: coupling part
24: boss part
25, 25a: inner spherical convex surface part
26: rocking shaft
27: guide-side spring engaging portion
28, 28a: main body part
29, 29a: collar part
30, 30a: inner spherical concave surface part
31: guide surface part
32, 32a: outer spherical convex surface part
33, 33a: wedge portion
34: pivotal support part
35: guide groove
36: engaging concave portion
37: claw portion
38: rocking-side spring engaging portion
39: circle hole
40: center engaging portion
41: elastically deformable portion
42: fine gap
43: step surface
44: inner guide part
45: outer guide part

## Claims

1. A worm reducer comprising:
a housing (3a);
a worm wheel (4a) which is rotatably supported to the housing (3a);
a worm shaft (5a) which is rotatably supported to the housing (3a) with worm teeth (6a) provided on an axially intermediate part thereof being meshed with the worm wheel (4a), wherein a rotational force from a power source (9) is transmitted to a base end portion of the worm shaft (5a);
a tip end-side bearing (8a) which is configured to support a tip end-side portion of the worm shaft (5a) rotatably with respect to the housing (3a);
**characterized by**
a rocking member (19, 19a) which is provided around the tip end-side bearing (8a) inside the housing (3a) and is configured to rock about a rocking shaft (26) extending in a direction perpendicular to a center axis of the worm shaft (5a);
an urging member (21, 21a) which is configured to urge the rocking member (19, 19a) towards one side in a rocking direction about the rocking shaft (26); and
a guide member (18, 18a) which is provided to allow the worm shaft (5a) to move in a meshing direction in which the worm shaft (5a) comes close to the worm wheel (4a), and which is urged in the meshing direction as the rocking member (19, 19a) is urged to the one side in the rocking direction about the rocking shaft (26) by the urging member (21, 21a), thereby urging the worm shaft (5a) in the meshing direction via the tip end-side bearing (8a).

2. The worm reducer according to claim 1,
wherein the rocking member (19, 19a) includes a part which can be located at a position further than a center axis of the rocking shaft (26) in an opposite direction to the meshing direction and includes a wedge portion (33, 33a) of which a radial thickness increases from one side in the rocking direction about the rocking shaft (26) towards the other side, and
wherein the guide member (18, 18a) is urged in the meshing direction based on the increase of the radial thickness of a part of the wedge portion (33, 33a) which is interposed between inner peripheral surface of the housing (3a) and an outer peripheral surface of the guide member (18, 18a) as the rocking member (19, 19a) is urged to the one side in the rocking direction about the rocking shaft (26) by the urging member (21, 21a).

3. The worm reducer according to claim 2,
wherein the guide member (18, 18a) is further urged in the meshing direction by a reactive force which is to be applied to the guide member (18, 18a) when the urging member (21, 21a) urges the rocking member (19, 19a).

4. The worm reducer according to claim 1 or 2,
wherein an outer peripheral surface of the rocking member (19, 19a) includes an outer spherical convex surface part (32, 32a), and an inner peripheral surface of the rocking member (19, 19a) includes an inner spherical concave surface part (30, 30a) with which the guide member (18, 18a) is in sliding contact, and
wherein a center of curvature of the outer spherical convex surface part (32, 32a) is located at a position offset from a center of curvature of the inner spherical concave surface part (30, 30a).

5. The worm reducer according to any one of claims 1 to 4,
wherein one of the rocking member (19, 19a) and the guide member (18, 18a) is provided with the rocking shaft (26), and the other of the rocking member (19, 19a) and the guide member (18, 18a) is provided with a pivotal support part configured to pivotably support the rocking shaft (26).

6. The worm reducer according to any one of claims 1 to 5,
wherein an outer peripheral surface of the guide member (18, 18a) includes an inner spherical convex surface part (25, 25a) having a center at a point on the center axis of the rocking shaft (26), and
wherein an inner peripheral surface of the rocking member (19, 19a) includes an inner spherical concave surface part (30, 30a) which is to be spherically fitted with the inner spherical convex surface part (25, 25a).

7. The worm reducer according to any one of claims 1 to 6,
wherein the rocking member (19, 19a) includes a rocking-side engaging part, and the guide member (18, 18a) includes a guide-side engaging part, and
wherein a rocking range of the rocking member (19, 19a) about the rocking shaft (26) is regulated based on engagement of both the engaging parts.

8. The worm reducer according to any one of claims 1 to 7,
wherein an elastic member (20, 20a) is interposed between an inner peripheral surface of the housing (3a) and an outer peripheral surface of the rocking member (19, 19a), and
wherein the rocking member (19, 19a) is urged in the meshing direction by an elastic force of the elastic member (20, 20a).

9. The worm reducer according to claim 8,
wherein the rocking member (19, 19a) is supported inside the housing (3a) without radial rattling by the elastic force of the elastic member (20, 20a).

10. The worm reducer according to any one of claims 1 to 9,
wherein the urging member (21, 21a) includes a coil spring, and both end portions of the coil spring are engaged to the rocking member (19, 19a) while an inner peripheral surface thereof is contacted to an outer peripheral surface of the guide member (18, 18a), so that the coil spring urges the rocking member (19, 19a) to the one side in the rocking direction about the rocking shaft (26) and applies a reactive force in the meshing direction, which is to be applied to the outer peripheral surface of the guide member (18, 18a) by urging of the rocking member (19, 19a).

11. The worm reducer according to any one of claims 1 to 9,
wherein one end-side portion of the urging member (21, 21a) is configured to urge the guide member (18, 18a) in the meshing direction and the other end-side portion of the urging member (21, 21a) is configured to urge the rocking member (19, 19a) to the one side in the rocking direction about the rocking shaft (26).

## Patentansprüche

1. Schneckengetriebe, Folgendes umfassend:
ein Gehäuse (3a);
ein Schneckenrad (4a), das drehbar auf dem Gehäuse (3a) gelagert ist;
eine Schneckenwelle (5a), die drehbar auf dem Gehäuse (3a) gelagert ist, wobei auf einem axial mittleren Teil davon Schneckenzähne (6a) bereitgestellt sind, die mit dem Schneckenrad (4a) in Kämm-Eingriff sind, wobei eine Drehkraft aus einer Leistungsquelle (9a) auf einen Basisendabschnitt der Schneckenwelle (5a) übertragen wird;
ein spitzenendseitiges Lager (8a), das konfiguriert ist, um einen spitzenendseitigen Abschnitt der Schneckenwelle (5a) in Bezug auf das Gehäuse (3a) drehbar zu lagern;
**gekennzeichnet durch**
ein Schwenkelement (19, 19a), das um das spitzenendseitige Lager (8a) herum innerhalb des Gehäuses (3a) bereitgestellt und konfiguriert ist, um eine Schwenkwelle (26) herum, die sich in eine Richtung senkrecht zu einer Mittelachse der Schneckenwelle (5a) erstreckt, zu schwenken;
ein Druckelement (21, 21a), das konfiguriert ist, um das Schwenkelement (19, 19a) in Richtung einer Seite in eine Schwenkrichtung um die Schwenkwelle (26) herum zu drücken; und
ein Führungselement (18, 18a), das konfiguriert ist, um es der Schneckenwelle (5a) zu ermöglichen, sich in eine Kämmrichtung zu bewegen, in der die Schneckenwelle (5a) in die Nähe des Schneckenrads (4a) gelangt, und das in die Kämmrichtung gedrückt wird, wenn das Schwenkelement (19, 19a) durch das Druckelement (21, 21a) in die Schwenkrichtung um die Schwenkwelle (26) herum in Richtung der einen Seite gedrückt wird, wodurch die Schneckenwelle (5a) über das spitzenendseitige Lager (8a) in die Kämmrichtung gedrückt wird.

2. Schneckengetriebe nach Anspruch 1,
wobei das Schwenkelement (19, 19a) einen Teil umfasst, der sich in einer Position befinden kann, die in entgegengesetzter Richtung zur Kämmrichtung weiter weg als eine Mittelachse der Schwenkwelle (26) liegen kann und einen Keilabschnitt (33, 33a) umfasst, der eine radiale Dicke aufweist, welche von einer Seite in die Schwenkrichtung um die Schwenkwelle (26) herum hin zur anderen Seite zunimmt; und
wobei das Führungselement (18, 18a) basierend auf der Zunahme der radialen Dicke eines Teils des Keilabschnitts (33, 33a), der zwischen einer Innenumfangsfläche des Gehäuses (3a) und einer Außenumfangsfläche des Führungselements (18, 18a) angeordnet ist, in die Kämmrichtung gedrückt wird, wenn das Schwenkelement (19, 19a) durch das Druckelement (21, 21a) in die Schwenkrichtung um die Schwenkwelle (26) herum in Richtung der einen Seite gedrückt wird.

3. Schneckengetriebe nach Anspruch 2,
wobei das Führungselement (18, 18a) durch eine Reaktionskraft, die auf das Führungselement (18, 18a) zu beaufschlagen ist, wenn das Druckelement (21, 21a) gegen das Schwenkelement (19, 19a) drückt, weiter in die Kämmrichtung gedrückt wird.

4. Schneckengetriebe nach Anspruch 1 oder 2,
wobei eine Außenumfangsfläche des Schwenkelements (19, 19a) einen äußeren kugelförmigen konvexen Oberflächenteil (32, 32a) umfasst und eine Innenumfangsfläche des Schwenkelements (19, 19a) einen inneren kugelförmigen konkaven Oberflächenteil (30, 30a) umfasst, mit dem das Führungselement (18, 18a) in Gleitkontakt ist, und wobei
sich ein Krümmungsmittelpunkt des äußeren kugelförmigen konvexen Oberflächenteils (32, 32a) in einer Position befindet, die von einem Krümmungsmittelpunkt des inneren kugelförmigen konkaven Oberflächenteils (30, 30a) versetzt ist.

5. Schneckengetriebe nach einem der Ansprüche 1 bis 4,
wobei eines aus dem Schwenkelement (19, 19a) und dem Führungselement (18, 18a) mit der Schwenkwelle (26) bereitgestellt ist und das andere des Schwenkelements (19, 19a) und des Führungselements (18, 18a) mit einem Schwenklagerungsteil bereitgestellt ist, der konfiguriert ist, um die Schwenkwelle (26) schwenkbar zu lagern.

6. Schneckengetriebe nach einem der Ansprüche 1 bis 5,
wobei eine Außenumfangsfläche des Führungselements (18, 18a) einen inneren kugelförmigen konvexen Oberflächenteil (25, 25a) umfasst, der einen Mittelpunkt auf einem Punkt der Mittelachse der Schwenkwelle (26) aufweist, und wobei
eine Innenumfangsfläche des Schwenkelements (19, 19a) einen inneren kugelförmigen konkaven Oberflächenteil (30, 30a) umfasst, der mit dem inneren kugelförmigen konvexen Oberflächenteil (25, 25a) kugelförmig zusammenpasst.

7. Schneckengetriebe nach einem der Ansprüche 1 bis 6,
wobei das Schwenkelement (19, 19a) einen Schwenkseiten-Eingriffsteil umfasst und das Führungselement (18, 18a) einen Führungsseiten-Eingriffsteil umfasst, und wobei
ein Schwenkbereich des Schwenkelements (19, 19a) um die Schwenkwelle (26) herum basierend auf dem Eingreifen der beiden Eingriffsteile eingestellt ist.

8. Schneckengetriebe nach einem der Ansprüche 1 bis 7, wobei ein elastisches Element (20, 20a) zwischen einer Innenumfangsfläche des Gehäuses (3a) und einer Außenumfangsfläche des Schwenkelements (19, 19a) angeordnet ist, und wobei
das Schwenkelement (19, 19a) durch eine Spannkraft des elastischen Elements (20, 20a) in die Kämmrichtung gedrückt wird.

9. Schneckengetriebe nach Anspruch 8, wobei das Schwenkelement (19, 19a) ohne radiale Rüttelbewegungen durch die Spannkraft des elastischen Elements (20, 20a) innerhalb des Gehäuses gelagert ist.

10. Schneckengetriebe nach einem der Ansprüche 1 bis 9,
wobei das Druckelement (21, 21a) eine Schraubenfeder umfasst und wobei beide Endabschnitte der Schraubenfeder in das Schwenkelement (19, 19a) in Eingriff gebracht sind, während eine Innenumfangsfläche davon mit einer Außenumfangsfläche des Führungselements (18, 18a) in Berührung ist, so dass die Schraubenfeder das Schwenkelement (19, 19a) zu der einen Seite in Schwenkrichtung um die Schwenkwelle (26) herum drückt und eine Reaktionskraft in die Kämmrichtung beaufschlagt, die durch Drücken gegen das Schwenkelement (19, 19a) auf die Außenumfangsfläche des Führungselements (18, 18a) zu beaufschlagen ist.

11. Schneckengetriebe nach einem der Ansprüche 1 bis 9,
wobei ein Endseitenabschnitt des Druckelements (21, 21a) konfiguriert ist, um das Führungselement (18, 18a) in die Kämmrichtung zu drücken, und wobei der andere Endseitenabschnitt des Druckelements (21, 21a) konfiguriert ist, um das Schwenkelement (19, 19a) zu der einen Seite in die Schwenkrichtung um die Schwenkwelle (26) herum zu drücken.

## Revendications

1. Réducteur à vis sans fin comprenant :
un boîtier (3a) ;
une roue à vis sans fin (4a) qui est supportée, en rotation, sur le boîtier (3a) ;
un arbre à vis sans fin (5a) qui est supporté, en rotation, sur le boîtier (3a) avec des dents de vis sans fin (6a) prévues sur sa partie axialement intermédiaire qui sont engrenées avec la roue à vis sans fin (4a), dans lequel une force de rotation provenant d'une source de puissance (9) est transmise à une partie d'extrémité de base de l'arbre à vis sans fin (5a) ;
un palier du côté de l'extrémité de pointe (8a) qui est configuré pour supporter une partie du côté de l'extrémité de pointe de l'arbre à vis sans fin (5a) en rotation par rapport au boîtier (3a) ;
**caractérisé par** :
un élément basculant (19, 19a) qui est prévu autour du palier du côté de l'extrémité de pointe (8a) à l'intérieur du boîtier (3a) et est configuré pour basculer autour d'un arbre basculant (26) s'étendant dans une direction perpendiculaire à un axe central de l'arbre à vis sans fin (5a) ;
un élément de poussée (21, 21a) qui est configuré pour pousser l'élément basculant (19, 19a) vers un côté dans une direction de basculement autour de l'arbre basculant (26) ; et
un élément de guidage (18, 18a) qui est prévu pour permettre à l'arbre à vis sans fin (5a) de se déplacer dans une direction d'engrènement dans laquelle l'arbre à vis sans fin (5a) se rapproche de la roue à vis sans fin (4a) et qui est poussé dans la direction d'engrènement lorsque l'élément basculant (19, 19a) est poussé vers le un côté dans la direction de basculement autour de l'arbre basculant (26) par l'élément de poussée (21, 21a), poussant ainsi l'arbre à vis sans fin (5a) dans la direction d'engrènement via le palier du côté de l'extrémité de pointe (8a).

2. Réducteur à vis sans fin selon la revendication 1,
dans lequel l'élément basculant (19, 19a) comprend une partie qui peut être positionnée dans une position plus éloignée d'un axe central de l'arbre basculant (26) dans une direction opposée à la direction d'engrènement et comprend une partie de cale (33, 33a) dont une épaisseur radiale augmente à partir d'un côté dans la direction de basculement autour de l'arbre basculant (26) vers l'autre côté, et
dans lequel l'élément de guidage (18, 18a) est poussé dans la direction d'engrènement sur la base de l'augmentation de l'épaisseur radiale d'une partie de la partie de cale (33, 33a) qui est intercalée entre la surface périphérique interne du boîtier (3a) et une surface périphérique externe de l'élément de guidage (18, 18a) lorsque l'élément basculant (19, 19a) est poussé vers un côté dans la direction de basculement autour de l'arbre basculant (26) par l'élément de poussée (21, 21a).

3. Réducteur à vis sans fin selon la revendication 2,
dans lequel l'élément de guidage (18, 18a) est en outre poussé dans la direction d'engrènement par une force de réaction qui doit être appliquée sur l'élément de guidage (18, 18a) lorsque l'élément de poussée (21, 21a) pousse l'élément basculant (19, 19a).

4. Réducteur à vis sans fin selon la revendication 1 ou 2,
dans lequel une surface périphérique externe de l'élément basculant (19, 19a) comprend une partie de surface convexe périphérique externe (32, 32a) et une surface périphérique interne de l'élément basculant (19, 19a) comprend une partie de surface concave sphérique interne (30, 30a) avec laquelle l'élément de guidage (18, 18a) est en contact coulissant, et
dans lequel un centre de courbure de la partie de surface convexe sphérique externe (32, 32a) est positionné dans une position décalée d'un centre de courbure de la partie de surface concave sphérique interne (30, 30a).

5. Réducteur à vis sans fin selon l'une quelconque des revendications 1 à 4,
dans lequel l'un parmi l'élément basculant (19, 19a) et l'élément de guidage (18, 18a) est prévu avec l'arbre basculant (26), et l'autre parmi l'élément basculant (19, 19a) et l'élément de guidage (18, 18a) est prévu avec une partie de support pivotante configurée pour supporter, de manière pivotante, l'arbre basculant (26).

6. Réducteur à vis sans fin selon l'une quelconque des revendications 1 à 5,
dans lequel une surface périphérique externe de l'élément de guidage (18, 18a) comprend une partie de surface convexe sphérique interne (25, 25a) ayant un centre au niveau d'un point sur l'axe central de l'arbre basculant (26), et
dans lequel une surface périphérique interne de l'élément basculant (19, 19a) comprend une partie de surface concave sphérique interne (30, 30a) qui doit être montée, de manière sphérique, avec la partie de surface convexe sphérique interne (25, 25a).

7. Réducteur à vis sans fin selon l'une quelconque des revendications 1 à 6,
dans lequel l'élément basculant (19, 19a) comprend une partie de mise en prise du côté basculant et l'élément de guidage (18, 18a) comprend une partie de mise en prise du côté du guidage, et
dans lequel une plage de basculement de l'élément basculant (19, 19a) autour de l'arbre basculant (26) est régulée sur la base de la mise en prise des deux parties de mise en prise.

8. Réducteur à vis sans fin selon l'une quelconque des revendications 1 à 7,
dans lequel un élément élastique (20, 20a) est intercalé entre une surface périphérique interne du boîtier (3a) et une surface périphérique externe de l'élément basculant (19, 19a), et
dans lequel l'élément basculant (19, 19a) est poussé dans la direction d'engrènement par une force élastique de l'élément élastique (20, 20a).

9. Réducteur à vis sans fin selon la revendication 8, dans lequel l'élément basculant (19, 19a) est supporté à l'intérieur du boîtier (3a) sans cliquetis radial par la force élastique de l'élément élastique (20, 20a).

10. Réducteur à vis sans fin selon l'une quelconque des revendications 1 à 9,
dans lequel l'élément de poussée (21, 21a) comprend un ressort hélicoïdal, et deux parties d'extrémité du ressort hélicoïdal sont mises en prise avec l'élément basculant (19, 19a) alors que sa surface périphérique interne est en contact avec une surface périphérique externe de l'élément de guidage (18, 18a), de sorte que le ressort hélicoïdal pousse l'élément basculant (19, 19a) vers le un côté dans la direction de basculement autour de l'arbre basculant (26) et applique une force de réaction dans la direction d'engrènement, qui doit être appliquée sur la surface périphérique externe de l'élément de guidage (18, 18a) par poussée de l'élément basculant (19, 19a).

11. Réducteur à vis sans fin selon l'une quelconque des revendications 1 à 9,
dans lequel la une partie du côté de l'extrémité de l'élément de poussée (21, 21a) est configurée pour pousser l'élément de guidage (18, 18a) dans la direction d'engrènement et la partie du côté de l'autre extrémité de l'élément de poussée (21, 21a) est configurée pour pousser l'élément basculant (19, 19a) sur un côté dans la direction de basculement autour de l'arbre basculant (26).
